# EUROPEAN PATENT APPLICATION

(11) **EP 3 009 924 A1**
(43) Date of publication of application: **20.04.2016**
(21) Application number: 14837522.3
(22) Date of filing: 24.06.2014
(51) Int. Cl.: G06F 3/042, G02B 6/122

(54) **POSITION SENSOR**

(30) Priority: 21.08.2013 JP 2013171351; 09.05.2014 JP 2014097531
(71) Applicant: Nitto Denko Corporation, Ibaraki-shi, Osaka 567-8680 (JP)
(72) Inventor: SHIMIZU Yusuke, Ibaraki-shi Osaka 567-8680 (JP); YOSHIOKA Ryoma, Ibaraki-shi Osaka 567-8680 (JP)
(74) Representative: Hoffmann Eitle
(86) International application number: PCT/JP2014/066608
(87) International publication number: WO 2015/025608

(57) **Abstract**

There is provided a position sensor capable of maintaining the accuracy of the detection of a pressed position with a pen tip, a finger tip and the like even when irregular variations occur in the intensity of light received by a light-receiving element. This position sensor includes: an optical waveguide in a sheet form including an under cladding layer in a sheet form, a plurality of linear cores arranged in a lattice form and formed on a surface of the under cladding layer, and an over cladding layer in a sheet form formed to cover the cores; a light-emitting element connected to one end surface of the cores of the optical waveguide; and a light-receiving element connected to the other end surface of the cores. The position sensor performs a reference setting process (reference acquisition) for setting the intensity of light which the light-receiving element receives from the cores to a constant reference value not only at the start of use but also intermittently at predetermined time intervals after the start of use. In addition, when the light-receiving element senses a change in the amount of light propagating in the cores due to a press with a pen tip and the like during an input operation using a pen and the like, the position sensor performs a reference setting stop process for stopping the reference setting process.

## Description

### TECHNICAL FIELD

The present invention relates to a position sensor for optically detecting a position.

### BACKGROUND ART

A position sensor for optically detecting a pressed position has been hitherto proposed (see PTL 1, for example). This position sensor includes an optical waveguide in a sheet form including a plurality of cores serving as optical paths and arranged in vertical and horizontal directions, and a cladding covering peripheral edge portions of the cores. The position sensor is configured such that light from a light-emitting element is incident on one end surface of the cores and such that the light propagating in the cores is sensed by a light-receiving element at the other end surface of the cores. When part of the surface of the position sensor in such a sheet form is pressed with a finger and the like, some of the cores corresponding to the pressed part are crushed (decreased in cross-sectional area thereof as seen in the pressed direction). In the cores corresponding to the pressed part, the amount of light propagating therein is decreased and the amount of light sensed by the light-receiving element is accordingly decreased, so that the aforementioned pressed position is detected.

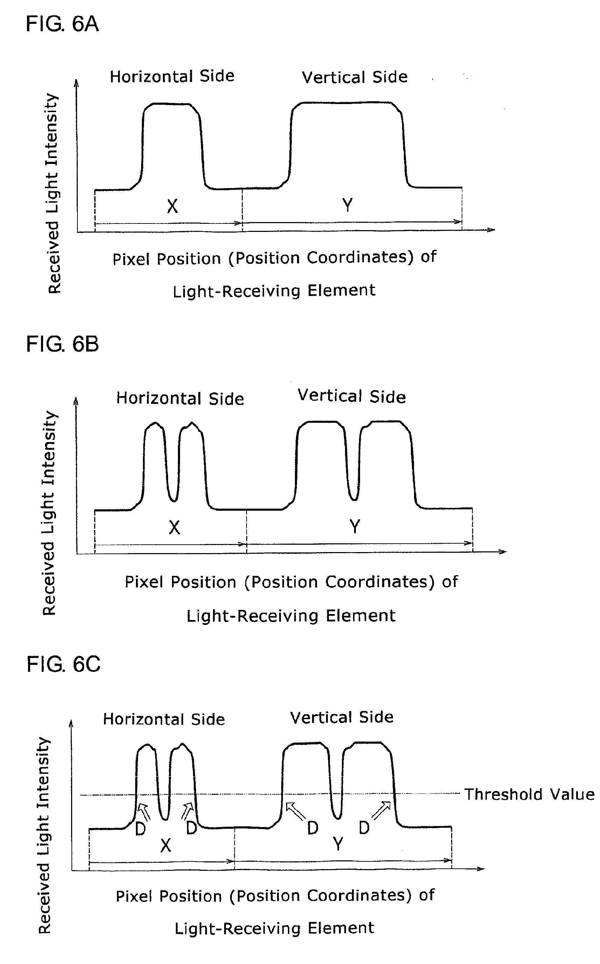

Specifically, when light propagates in the cores arranged in the vertical and horizontal directions in this manner, a graph showing the intensity of light which the light-receiving element receives from the cores generally illustrates a high intensity in a middle portion of a horizontal side portion and a middle portion of a vertical side portion on the light-receiving side, as shown in FIG. 6A. The cores are connected in the order of arrangement thereof to respective pixels of a light-receiving part of the light-receiving element.

When a user inputs a character and the like into a middle portion of the position sensor, for example, with a pen, a finger and the like in this state, part of the surface of the position sensor is pressed with the tip of the pen, the tip of the finger and the like, so that the intensity of light received by the light-receiving element is lowered in the pressed part. Accordingly, parts of the aforementioned graph corresponding to the pressed part are lowered, as shown in FIG. 6B.

For the detection of the input position (coordinates) of the pen tip, the finger tip and the like, it is necessary to recognize the part (pressedpart) having a lowered received light intensity. To this end, as shown in FIG. 6C, a threshold value for the received light intensity is set, and the position (coordinates) of the pen tip, the finger tip and the like is detected based on the received light intensity lower than the threshold value.

### RELATED ART DOCUMENT

### PATENT DOCUMENT

PTL 1: JP-A-HEI8(1996)-234895

### SUMMARY OF INVENTION

However, not only the aforementioned pressed part but also four parts D indicated by thick arrows in FIG. 6C have a received light intensity lower than the threshold value in the aforementioned case. This makes it impossible to accurately detect the position of the pen tip, the finger tip and the like.

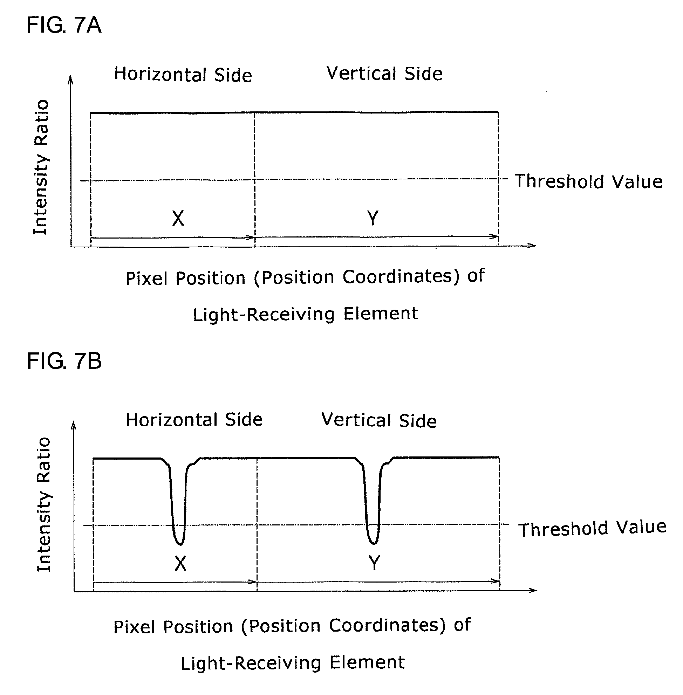

To solve this problem, as shown in FIG. 7A, the present inventors have performed a process (reference acquisition) of defining the varying intensity of received light shown in FIG. 6A as a reference (100%) once at the start of use, and set a new threshold value (for example, a value of 50% based on the reference of the received light intensity) upon the reference acquisition at the start of use. This makes only the received intensity light of the pressed part with the pen tip, the finger tip and the like become lower than the new threshold value, as shown in FIG. 7B, thereby achieving accurate detection of the position of the pen tip, the finger tip and the like.

Unfortunately, there are cases in which even such a position sensor does not accurately detect the pen tip and the finger tip depending on the circumstances. As a result of the investigation into the cause of such inaccurate detection, the present inventors have found that, when a user's hand which holds the pen and the like is placed, for example, on the position sensor in the sheet form for an input operation, the optical waveguide is distorted to cause irregular variations in the received light intensity subjected to the reference acquisition, thereby resulting in the appearance of a part having a received light intensity lower than the new threshold value in spite of the fact that no input operation is performed with the pen tip, the finger tip and the like. It has been found that the aforementioned position sensor still has room for improvement in this regard.

In view of the foregoing, it is therefore an object of the present invention to provide a position sensor capable of maintaining the accuracy of the detection of a pressed position with a pen tip, a finger tip and the like even when irregular variations occur in the intensity of light received by a light-receiving element.

To accomplish the aforementioned object, a position sensor according to the present invention comprises : an optical waveguide in a sheet form including an under cladding layer in a sheet form, a plurality of linear cores arranged in a lattice form on a surface of the under cladding layer, and an over cladding layer in a sheet form covering the cores; a light-emitting element connected to one end surface of the cores of the optical waveguide; a light-receiving element connected to the other end surface of the cores, a reference setting means for setting an intensity of light which the light-receiving element receives from the cores to a constant reference value intermittently at predetermined time intervals after the start of use of the position sensor; and a reference setting stop means for stopping the reference setting means from performing the reference value setting when the light-receiving element senses a change in the amount of light propagating in the cores due to pressing of an input region, the input region is a surface part of the over cladding layer corresponding to part of the cores arranged in the lattice form of the optical waveguide, wherein light emitted from the light-emitting element passes through the cores of the optical waveguide and is received by the light-receiving element, and wherein a pressed position is specified, based on a change in the amount of light propagating in the cores, when the input region is pressed at any position.

The position sensor according to the present invention includes the reference setting means for setting the intensity of light which the light-receiving element receives from the cores to the constant reference value intermittently at the predetermined time intervals after the start of use of the position sensor. Thus, if the optical waveguide is distorted to cause irregular variations in the intensity of light received by the light-receiving element because user's hand, for example, is placed on the position sensor according to the present invention, the received light intensity is set again to the constant reference value within a predetermined time period. This setting is repeated at the predetermined time intervals. Thus, if irregular variations occur in the intensity of light received by the light-receiving element as described above, the received light intensity is set again to the constant reference value within the predetermined time period, so that the received light intensity only in a pressed part with a pen tip, a finger tip and the like is lowered during an input operation with a pen, a finger and the like. This allows the accurate detection of the pressed position. The position sensor according to the present invention further includes the reference setting stop means. The setting of the received light intensity to the constant reference value is stopped when the pressed position with the pen tip, the finger tip and the like is detected as described above. This prevents position data about the detected pressed position from being erased by the setting of the received light intensity to the constant reference value.

In particular, when the predetermined time intervals at which the reference setting means sets the intensity of received light to the constant reference value are in the range of 50 to 5000 ms, a proper input operation is achieved during the normal use of the position sensor according to the present invention.

### BRIEF DESCRIPTION OF DRAWINGS

[FIG. 1] FIG. 1A is a plan view schematically showing one embodiment of a position sensor according to the present invention, and FIG. 1B is an enlarged sectional view of principal parts thereof.
[FIG. 2] FIG. 2A is a graph showing the intensity of light received by a light-receiving element of the position sensor under normal conditions, FIG. 2B is a graph showing an intensity ratio of light after a reference setting process is performed on the graph of FIG. 2A, and FIG. 2C is a graph showing the detection of a pressed position in the graph of FIG. 2B.
[FIG. 3] FIG. 3 is an illustration showing an example of a flow diagram for a CPU program in the position sensor.
[FIG. 4] FIGS. 4A to 4F are enlarged plan views schematically showing configurations of intersection of linear cores arranged in a lattice form in the position sensor.
[FIG. 5] FIGS. 5A and 5B are enlarged plan views schematically showing paths of light at intersections of the linear cores arranged in the lattice form.
[FIG. 6] FIG. 6A is a graph showing the intensity of light received by a light-receiving element of a conventional position sensor under normal conditions,
FIG. 6B is a graph showing the detection of a pressed position in the graph of FIG. 6A, and FIG. 6C is a graph showing the setting of a threshold value in the graph of FIG. 6B.
[FIG. 7] FIG. 7A is a graph showing an intensity ratio of light after the reference setting process is performed on the graph of FIG. 6A, and FIG. 7B is a graph showing the detection of a pressed position in the graph of FIG. 7A.

### DESCRIPTION OF EMBODIMENTS

Next, an embodiment according to the present invention will now be described in detail with reference to the drawings.

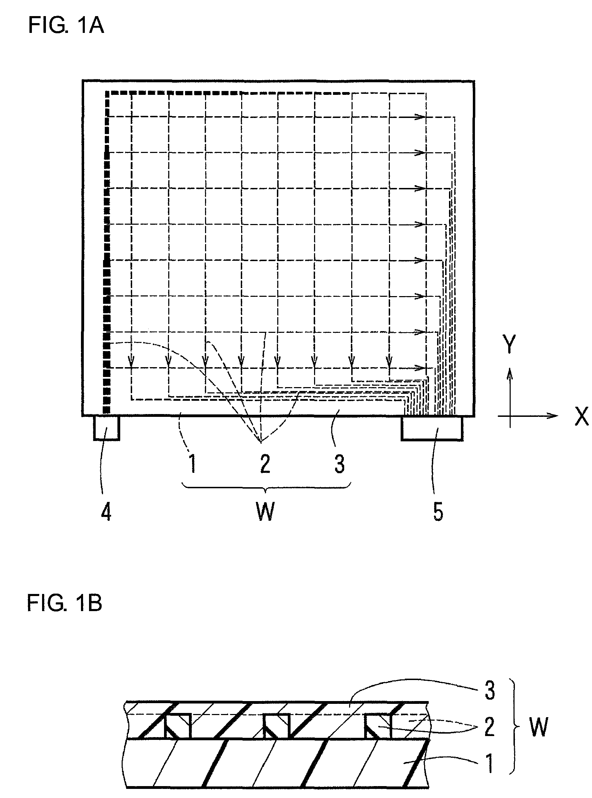

FIG. 1A is a plan view showing one embodiment of a position sensor according to the present invention. FIG. 1B is a sectional view, on an enlarged scale, of a middle portion of the position sensor. The position sensor of this embodiment includes: an optical waveguide W in a rectangular sheet form configured such that linear cores 2 arranged in a lattice form are held between an under cladding layer 1 and an over cladding layer 3 both in a rectangular sheet form; a light-emitting element 4 connected to one end surface of the linear cores 2 arranged in the lattice form; and a light-receiving element 5 connected to the other end surface of the linear cores 2. Light emitted from the light-emitting element 4 passes through the cores 2 and is received by the light-receiving element 5. A surface part of the over cladding layer 3 corresponding to part of the cores 2 arranged in a lattice form serves as an input region. In FIG. 1A, the cores 2 are indicated by broken lines, and the thickness of the broken lines indicates the thickness of the cores 2. Also, in FIG. 1A, the number of cores 2 are shown as abbreviated. Arrows in FIG. 1A indicate the directions in which light travels.

The position sensor according to this embodiment performs a reference setting process (reference acquisition) (with reference to FIGS. 7A and 7B) for setting the intensity of light which the light-receiving element 5 receives from the cores 2 to a constant reference value as performed in the aforementioned conventional position sensor not only at the start of use but also intermittently at predetermined time intervals after the start of use. In addition, when the light-receiving element 5 senses a change in the amount of light propagating in the cores 2 due to a press with a pen tip, a finger tip and the like during an input operation using a pen, a finger and the like, the position sensor according to this embodiment performs a reference setting stop process for stopping the aforementioned reference setting process. The position sensor includes a CPU (central processing unit) (not shown) for controlling the position sensor. The CPU incorporates a program (reference setting means) for performing the reference setting process intermittently at the predetermined time intervals after the start of use, and a program (reference setting stop means) for performing the reference setting stop process.

If the optical waveguide W is distorted to cause irregular variations in the intensity of light received by the light-receiving element 5 because a user's hand, for example, is placed on the position sensor when a user uses such a position sensor to perform an input operation on a surface of the position sensor with a pen, finger and the like, the received light intensity is set again to the constant reference value within a predetermined time period by the aforementioned reference setting process. This reference setting process is repeated at the predetermined time intervals. This allows the accurate detection of the position of a pen tip, a finger tip and the like (position where the received light intensity is lowered by a press with a pen tip, a finger tip and the like) even if irregular variations occur in the intensity of light received by the light-receiving element 5 as described above. In addition, when the position pressed with the pen tip, the finger tip and the like is detected during the input operation as described above, the reference setting process is stopped by the reference setting stop process. This prevents position data about the detected pen tip, finger tip and the like (pressed position) from being erased by the reference setting process. After the input operation is finished (the position pressed with the pen tip, the finger tip and the like is no longer detected), the reference setting process is repeated at the predetermined time intervals again.

The predetermined time intervals at which the reference setting process is performed are preferably in the range of 50 to 5000 ms (milliseconds) from the viewpoint of allowing a proper input operation during the normal use of the position sensor. When the predetermined time intervals are less than 50 ms, the time intervals are too short to allow the proper input operation. When the predetermined time intervals exceed 5000 ms, the time intervals are too long to perform the reference setting process before the start of the input operation. For the special use of the position sensor, the time intervals may be set as appropriate depending on the use thereof.

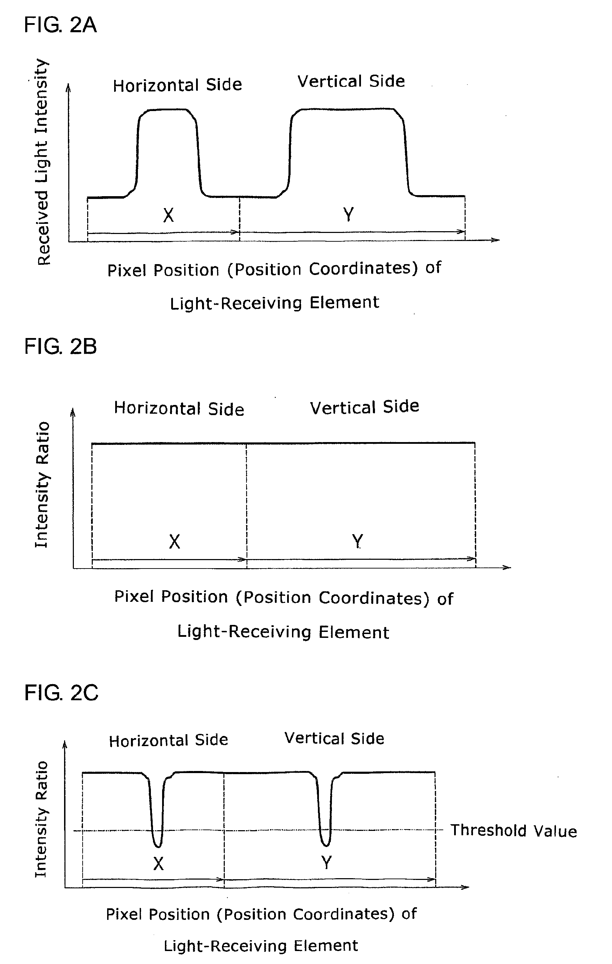

More specifically, when neither the reference setting process nor the input operation is performed while light propagates in the cores 2 arranged in a lattice form in the position sensor, a graph showing the intensity of light which the light-receiving element 5 receives from the cores 2 generally illustrates a high intensity in a middle portion of a horizontal side portion and a middle portion of a vertical side portion on the light-receiving side, as shown in FIG. 2A, as stated in the prior art technique. The cores 2 are connected in the order of arrangement thereof to respective pixels of a light-receiving part of the light-receiving element 5.

As stated earlier, as shown in FIG. 2B, the reference setting process (reference acquisition) for setting the intensity of light received by the light-receiving element 5 to the constant reference value is performed not only at the start of use of the position sensor (for example, at the turning-on of the power to the position sensor) but also intermittently at the predetermined time intervals after the start of use.

For the input of information by means of the position sensor, for example, a user places the position sensor on a desk and the like, and inputs a character, a drawing, a mark and the like into the input region with a pen, a finger tip and the like. At this time, a press with the pen tip, the finger tip and the like decreases the amount of light propagating in the cores 2 in the pressed part, so that the intensity of light received by the light-receiving element 5 is lowered in that part of the cores 2. Accordingly, parts of the aforementioned graph corresponding to the pressed part are lowered, as shown in FIG. 2C. The position (coordinates) of the pen tip, the finger tip and the like (pressed part) is detected because the parts having a lowered received light intensity (lowered parts of the graph) are lower than a previously set threshold value. A locus of the position pressed with the pen tip and the finger tip serves as input information about the character, the drawing, the mark and the like.

When the position pressed with the pen tip, the finger tip and the like is detected during the input operation, the reference setting process is stopped by the reference setting stop process. This prevents position data about the detected pressed position from being erased by the reference setting process (process for setting the aforementioned received light intensity to the constant reference value).

After the input operation is finished (the position pressed with the pen tip, the finger tip and the like is no longer detected), the reference setting process is repeated at the predetermined time intervals again. Thus, even if irregular variations occur in the intensity of light received by the light-receiving element 5, the reference setting process is performed during the input operation, so that the position pressed with the pen tip, the finger tip and the like is accurately detected.

The position sensor may further include an output module for outputting inputted information (information about the movement locus of the pen tip and the like), a storage means such as a memory for storing the information therein, a battery serving as a power source, and the like, when necessary.

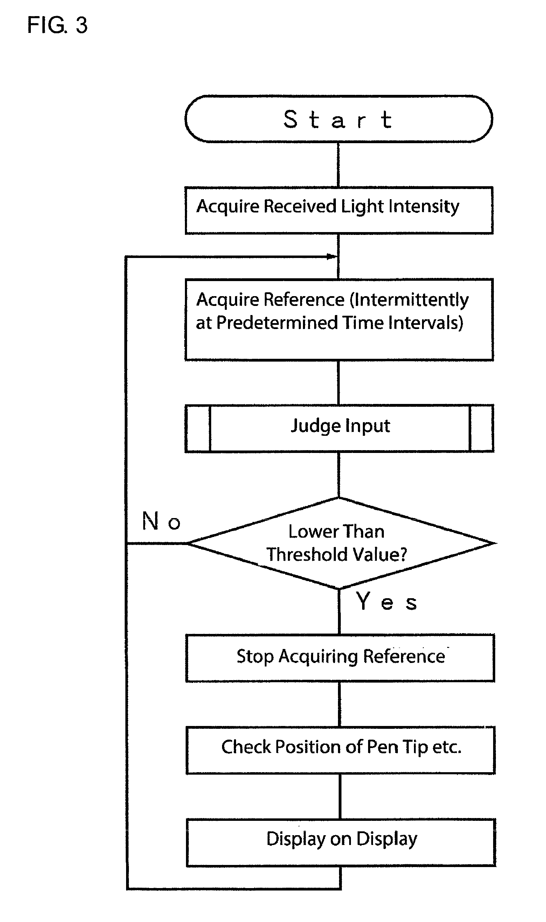

The position sensor may be connected to a personal computer (referred to hereinafter as a "PC") during the input operation. In this case, for example, information such as a document is displayed on a display of the PC. In that state, the aforementioned information such as a character is inputted into the input region of the position sensor with a pen, a finger and the like as described above. Thus, the locus of the pen tip, the finger tip and the like is detected by the position sensor, and is also transmitted as a signal to the PC by radio or through a connecting cable to thereby appear on the display. Thus, the information such as a character inputted by means of the position sensor which is superimposed on the information such as a document is displayed on the display. The displayed information may be stored in an information storage medium such as a hard disk in the PC and an external USB memory device. An exemplary flow diagram for the CPU program in such a case is shown in FIG. 3.

Software (program) for converting coordinates in the input region of the position sensor into coordinates on the screen of the display to display a character and the like inputted by means of the position sensor on the display is incorporated in the PC used herein for the purpose of displaying the character and the like inputted in the input region of the position sensor in a position on the display corresponding to the input position.

Further, when the position sensor further includes a storage means such as a memory, the aforementioned input information may be stored as digital data in the storage means, and may be reproduced (displayed) using a reproducing terminal (such as a PC and a mobile machine) later. The input information may be stored in the reproducing terminal. In this case, the reproducing terminal and the position sensor are connected to each other with a connecting cable such as a micro USB cable, for example.

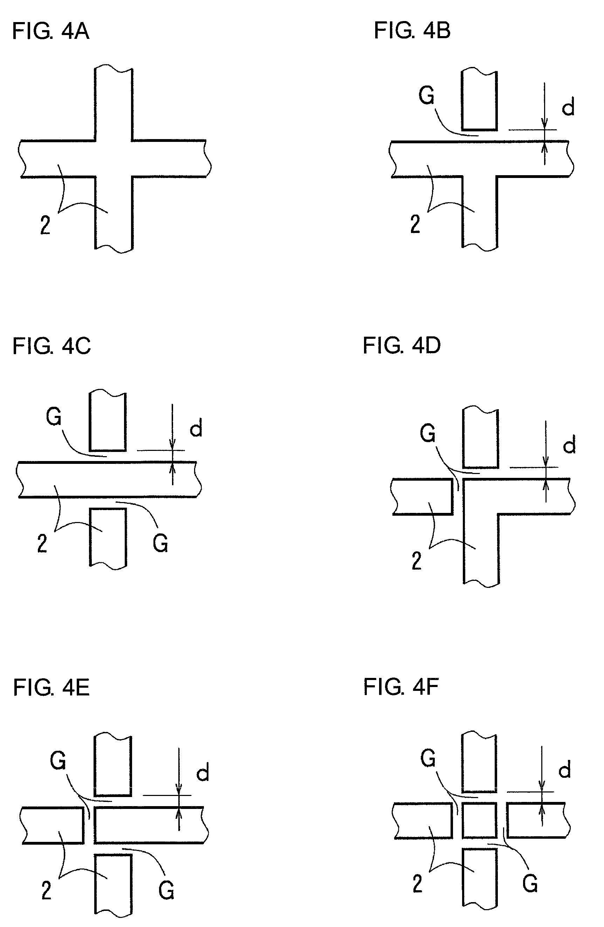

Each intersection of the linear cores 2 arranged in the lattice form is generally configured to be continuous in all of the four intersecting directions as shown in enlarged plan view in FIG. 4A in the aforementioned embodiment, but may be of other configurations. For example, each intersection may be separated by a gap G to become discontinuous only in one of the intersecting directions, as shown in FIG. 4B. The gap G is made of a material for the formation of the under cladding layer 1 or the over cladding layer 3. The gap G has a width d greater than 0 (zero) (it is only necessary that the gap G is formed) and generally not greater than 20 µm. Likewise, as shown in FIGS. 4C and 4D, each intersection may be discontinuous in two intersecting directions (in two opposed directions in FIG. 4C, and in two adjacent directions in FIG. 4D). Alternatively, each intersection may be discontinuous in three intersecting directions, as shown in FIG. 4E. Also, each intersection may be discontinuous in all of the four intersecting directions, as shown in FIG. 4F. Further, the cores 2 may be in a lattice form including two or more types of intersections shown in FIGS. 4A to 4F. The term "lattice form" formed by the linear cores 2 as used in the present invention shall be meant to include a lattice form in which part or all of the intersections are formed in the aforementioned manner.

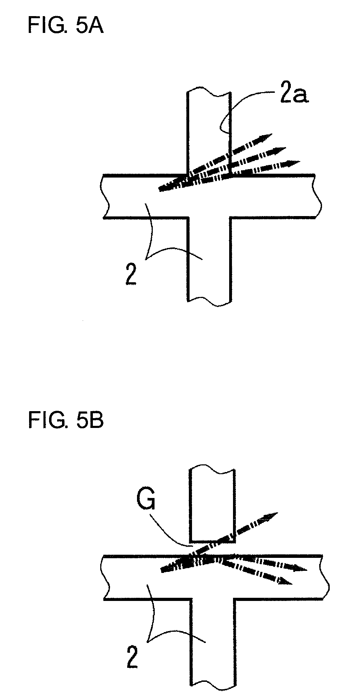

In particular, intersections which are discontinuous in at least one intersecting direction as shown in FIGS. 4B to 4F are capable of reducing intersection losses of light. At an intersection which is continuous in all of the four intersecting directions as shown in FIG. 5A, attention will be given on one intersecting direction (upward direction as seen in FIG. 5A). Then, part of light incident on the intersection reaches a wall surface 2a of a first core 2 perpendicular to a second core 2 through which the light travels, and is transmitted through the first core 2 (with reference to dash-double-dot arrows in FIG. 5A) because of the large angle of reflection from the wall surface. Such light transmission occurs also in the opposite intersecting direction (downward direction as seen in FIG. 5A). As shown in FIG. 5B, on the other hand, when an intersection is made discontinuous by the gap G in one intersecting direction (upward direction as seen in FIG. 5B), an interface between the gap G and a core 2 is formed. Then, part of light transmitted through the core 2 with reference to FIG. 5A is not transmitted through the core 2 but is reflected from the interface to continue traveling through the core 2 (with reference to dash-double-dot arrows in FIG. 5B) because of the smaller angle of reflection at the interface. Based on these facts, the reduction in intersection losses of light is achieved by making the intersection discontinuous in at least one intersecting direction as mentioned above. As a result, the sensitivity for detection of the pressed position with a pen tip and the like is increased.

In the aforementioned embodiment, examples of materials for the formation of the cores 2, the under cladding layer 1 and the over cladding layer 3 include photosensitive resins and thermosetting resins. The optical waveguide W may be produced by a manufacturing method depending on the materials. The cores 2 have a refractive index higher than the refractive indices of the under cladding layer 1 and the over cladding layer 3. The adjustment of the refractive indices may be made, for example, by adjusting the selection of the types of the materials for the formation of the cores 2, the under cladding layer 1 and the over cladding layer 3, and the composition ratio thereof. A rubber sheet may be used as the under cladding layer 1, and the cores 2 may be formed in a lattice form on the rubber sheet.

Also, an elastic layer such as a rubber layer may be provided, as required, on the lower surface of the under cladding layer 1. In this case, when the restoring forces of the under cladding layer 1, the cores 2 and the over cladding layer 3 are weakened or when the under cladding layer 1, the cores 2 and the over cladding layer 3 are originally made of materials having weak restoring forces, the elastic force of the elastic layer may be used to assist the weak restoring forces, thereby allowing the under cladding layer 1, the cores 2 and the over cladding layer 3 to return to their original states after the pressing of the pressed part is released.

Next, an inventive example of the present invention will be described in conjunction with a comparative example. It should be noted that the present invention is not limited to the inventive example.

### EXAMPLES

### [Material for Formation of Over Cladding Layer]

Component a: 30 parts by weight of an epoxy resin (EPOGOSEY PT available from Yokkaichi Chemical Company Limited).
Component b: 70 parts by weight of an epoxy resin (EHPE3150 available from Daicel Corporation).
Component c: 4 parts by weight of a photo-acid generator (CPI-200K available from San-Apro Ltd.).
Component d: 100 parts by weight of ethyl lactate (available from Wako Pure Chemical Industries, Ltd.).

A material for the formation of an over cladding layer was prepared by mixing these components a to d together.

### [Material for Formation of Cores]

Component e: 80 parts by weight of an epoxy resin (EHPE3150 available from Daicel Corporation).
Component f: 20 parts by weight of an epoxy resin (YDCN-700-10 available from Nippon Steel & Sumikin Chemical Co., Ltd.).
Component g: 1 part by weight of a photo-acid generator (SP170 available from ADEKA Corporation).
Component h: 50 parts by weight of ethyl lactate (available from Wako Pure Chemical Industries, Ltd.).

A material for the formation of cores was prepared by mixing these components e to h together.

### [Material for Formation of Under Cladding Layer]

Component i: 75 parts by weight of an epoxy resin (EPOGOSEY PT available from Yokkaichi Chemical Company Limited).
Component j : 25 parts by weight of an epoxy resin (JER1007 available from Mitsubishi Chemical Corporation).
Component k: 4 parts by weight of a photo-acid generator (CPI-200K available from San-Apro Ltd.).
Component l: 50 parts by weight of ethyl lactate (available from Wako Pure Chemical Industries, Ltd.).

A material for the formation of an under cladding layer was prepared by mixing these components i to 1 together.

### [Production of Optical Waveguide]

The over cladding layer was formed on a surface of a base material made of glass by a spin coating method with the use of the aforementioned material for the formation of the over cladding layer. The over cladding layer had a thickness of 5 µm, an elasticity modulus of 1.2 GPa, and a refractive index of 1.503.

Next, the cores were formed on a surface of the over cladding layer by a photolithographic method with the use of the aforementioned material for the formation of the cores. The cores had a thickness of 30 µm, a width of 100 µm in a portion of a lattice form, a spacing of 600 µm, an elasticity modulus of 3 GPa, and a refractive index of 1.523.

Next, the under cladding layer was formed on the surface of the over cladding layer by a spin coating method with the use of the aforementioned material for the formation of the under cladding layer so as to cover the cores. The under cladding layer had a thickness of 200 µm (as measured from the surface of the over cladding layer), an elasticity modulus of 3 MPa, and a refractive index of 1.503.

Then, a substrate made of PET (having a thickness of 1 mm) with a double-sided adhesive tape (having a thickness of 25 µm) affixed to one surface thereof was prepared. Next, the other adhesive surface of the double-sided adhesive tape was affixed to a surface of the under cladding layer. In that state, the over cladding layer was stripped from the base material made of glass.

### [Production of Position Sensor]

A light-emitting element (XH85-S0603-2s available from Optowell Co., Ltd.) was connected to one end surface of the cores of the optical waveguide, and a light-receiving element (s10226 available from Hamamatsu Photonics K.K.) was connected to the other end surface of the cores thereof. Then, a circuit was provided on which the light-emitting element, the light-receiving element, a CPU (dsPIC33FJ128MC706 available from Microchip Technology Inc.) for controlling the elements, a wireless module, a memory, a lithium-ion battery (3.7 V) and the like were mounted. Thus, a position sensor for each of Inventive and Comparative Examples was produced. A program for performing the aforementioned reference setting process intermittently at time intervals of 2000 ms after the start of use and a program for performing the aforementioned reference setting stop process were incorporated in the CPU. A flow diagram for these programs is shown in FIG. 3.

### [Comparative Example]

The position sensor in Comparative Example was prepared such that the reference setting process was performed only at the start of use and the reference setting stop process was not performed in Inventive Example.

### [Operation Check of Position Sensor]

A personal computer was further prepared. Software (program) for converting coordinates in a region of a surface part of the over cladding layer corresponding to the cores arranged in the lattice form in the position sensor in each of Inventive and Comparative Examples into coordinates on the screen of a display to display a character and the like inputted by means of the position sensor on the display was incorporated in the personal computer. The personal computer included a receiving means so as to be able to receive radio waves (information) from a wireless module of the position sensor. The personal computer and the position sensor were connected for transmission of information therebetween by radio.

The position sensor in each of Inventive and Comparative Examples was placed on a desk, with the over cladding layer positioned upside, and power to the position sensor was turned on. Next, a user held a pen in his/her hand, placed his/her hand outside an input region of the position sensor, and inputted a character into the input region with the pen. As a result, the inputted character appeared on the display properly in Inventive Example, but part of the inputted character did not properly appear in Comparative Example.

When the reference setting process to be performed intermittently after the start of use was performed at time intervals of 50 ms, 100 ms, 500 ms, 1000 ms, 3000 ms and 5000 ms in Inventive Example, results showing tendencies similar to those in Inventive Example were produced.

Although specific forms in the present invention have been described in the aforementioned example, the aforementioned example should be considered as merely illustrative and not restrictive. It is contemplated that various modifications evident to those skilled in the art could be made without departing from the scope of the present invention.

The position sensor according to the present invention is applicable to the proper detection of information such as a character, a drawing and a mark inputted into a surface of the position sensor itself.

## Claims

1. A position sensor comprising:
an optical waveguide in a sheet form including an under cladding layer in a sheet form, a plurality of linear cores arranged in a lattice form on a surface of the under cladding layer, and an over cladding layer in a sheet form covering the cores;
a light-emitting element connected to one end surface of the cores of the optical waveguide;
a light-receiving element connected to the other end surface of the cores;
a reference setting means for setting an intensity of light which the light-receiving element receives from the cores to a constant reference value intermittently at predetermined time intervals after the start of use of the position sensor; and
a reference setting stop means for stopping the reference setting means from performing the reference value setting when the light-receiving element senses a change in the amount of light propagating in the cores due to pressing of an input region, the input region is a surface part of the over cladding layer corresponding to part of the cores arranged in the lattice form of the optical waveguide,
wherein light emitted from the light-emitting element passes through the cores of the optical waveguide and is received by the light-receiving element, and
wherein a pressed position is specified, based on a change in the amount of light propagating in the cores, when the input region is pressed at any position.

2. The position sensor according to claim 1, wherein the predetermined time intervals at which the reference setting means sets the intensity of received light to the constant reference value are in the range of 50 to 5000 ms.
